**Europäisches Patentamt**

**European Patent Office**

**Office européen des brevets**

(11) Veröffentlichungsnummer: **0 022 168**
**B1**

(12) # EUROPÄISCHE PATENTSCHRIFT

(45) Veröffentlichungstag der Patentschrift:
28.07.82

(51) Int. Cl.³: **B 32 B 5/00**

(21) Anmeldenummer: **80102934.9**

(22) Anmeldetag: **27.05.80**

(54) **Verfahren zur Herstellung von Schichtwerkstoffen aus Hartschaumstoff und faserverstärktem Kunststoff.**

(30) Priorität: **05.07.79 DE 2927122**

(43) Veröffentlichungstag der Anmeldung:
**14.01.81 Patentblatt 81/2**

(45) Bekanntmachung des Hinweises auf die Patenterteilung:
**28.07.82 Patentblatt 82/30**

(84) Benannte Vertragsstaaten:
**BE DE FR GB IT NL SE**

(56) Entgegenhaltungen:
**DE-A-2 114 524**
**DE-A-1 704 555**
**DE-A-2 729 219**
**GB-A-1 220 951**
**GB-A-1 318 079**

(73) Patentinhaber: **Röhm GmbH, Kirschenallee**
**Postfach 4242, D-6100 Darmstadt 1 (DE)**

(72) Erfinder: **Maier, Leonhard, Leipziger Ring 425,**
**D-6054 Rodgau 3 (DE)**
Erfinder: **Pip, Wolfgang, Martinstrasse 4,**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Schichtwerkstoffen aus Hartschaumstoff und faserverstärktem Kunststoff

Die Erfindung betrifft ein verbessertes Verfahren zur Herstellung von Schichtwerkstoffen aus wenigstens einer Schicht aus einem hoch temperaturbeständigen Hartschaumstoff und wenigstens einer Schicht aus faserverstärktem Kunststoff. Schichtwerkstoffe dieser Art werden nach der DE-C 2114524 aus einer Hartschaumstoffplatte erzeugt, indem man sie mit einer Glasfasermatte, die mit einem flüssigen, härtbaren Harz getränkt ist, beschichtet und das Harz aushärtet. Dabei können gegebenenfalls geeignete Formwerkzeuge angewendet werden, jedoch bedarf es keines Pressdruckes für die Formgebung und Härtung.

Ein besonders vorteilhaftes Verfahren zur Herstellung von Schichtwerkstoffen bedient sich der sogenannten «Prepreg-Technik». Dabei wird die Schicht aus faserverstärktem Kunststoff aus einer vorfabrizierten, bei Raumtemperatur festen, faserhaltigen Masse gebildet. Beim Erhitzen wird die Masse plastisch und fliessfähig und härtet dann aus. Um eine gleichmässige Verteilung des faserhaltigen Kunststoffmaterials zu erreichen, muss bei diesem Verfahren ein beträchtlicher Druck ausgeübt werden. Die bekannten Schaumstoffe sind der gleichzeitigen Anwendung von Druck und Hitze während der zur vollständigen Aushärtung des Harzes erforderlichen Zeitdauer nicht hinreichend gewachsen. Infolgedessen sind die mit der herkömmlichen Prepreg-Technik mit einem Kern aus üblichem Hartschaumstoff hergestellten Formteile in vieler Hinsicht unbefriedigend. Häufig auftretende Mängel sind eine ungleichmässige Verteilung des Harzes und das Ausbeulen des Formteils.

Hartschaumstoffe von hoher Druckfestigkeit sind bekannt; neben Polyurethan-, Phenolharz- und Epoxidharzschaumstoffen sind vor allem Polymethacrylimidschaumstoffe zu nennen. Ihre Druckfestigkeit bei Raumtemperatur liegt im Bereich der in der Prepregtechnik angewendeten Drucke. Beim Erhitzen auf die zur Formgebung und Aushärtung erforderlichen Temperatur nimmt die Druckfestigkeit jedoch ab, so dass nur spezielle, extrem temperaturbeständige Schaumstofftypen, nicht jedoch die handelsüblichen Hartschaumstoffe nach der herkömmlichen Prepreg-Technik verarbeitbar sind.

Die Aufgabe der vorliegenden Erfindung besteht darin, Schichtwerkstoffe der eingangs beschriebenen Art ohne die bisher unvermeidbaren Mängel unter Anwendung der Prepreg-Technik herzustellen, d.h. unter Verwendung eines Kunststoffes in Form eines beim Erhitzen fliessfähigen und härtenden, faserhaltigen Materials, das im Verbund mit einem Hartschaumstoff unter Pressdruck erhitzt, zu einer mit dem Schaumstoff verbundenen Schicht geformt und gehärtet wird. Erfindungsgemäss wird die Härtung gemäss dem Kennzeichen des Patentanspruchs in zwei Stufen a) und b) durchgeführt.

Die Erfindung macht sich die hohe Druckfestigkeit des Schaumstoffes bei Raumtemperatur einerseits und die geringe Wärmeleitfähigkeit der Schaumstoffe andererseits zunutze. Es wurde gefunden, dass ein hoher Pressdruck nur während einer kurzen Zeitspanne am Beginn des Härtungsverfahrens notwendig ist. Der hohe Pressdruck wird nur benötigt, um das plastisch erweichte, faserhaltige Kunststoffmaterial zu einer Schicht zu verformen und eine Verankerung der Schicht in den Poren der angrenzenden Schaumstoffschicht zu bewirken. Während dieser Fliessvorgänge unter hohem Pressdruck wird zwar die unmittelbar an die plastische Kunststoffmasse angrenzende Schaumstoffschicht in solchem Masse erhitzt und erweicht, dass sie unter dem herrschenden Pressdruck deformiert wird. Die Erweichung und Verformung des Schaumstoffes bleiben jedoch auf eine dünne, oberflächennahe Zone beschränkt, während der Kern der Schaumstoffschicht in einem Temperaturbereich verbleibt, bei dem die Druckfestigkeit zur Aufnahme des Pressdruckes ausreicht. Das Harz lässt sich zu einer gleichmässigen Schicht verteilen.

Beim Abschluss der Fliessvorgänge ist das Kunststoffmaterial noch nicht ausgehärtet. Daher muss bis zum Abschluss der Härtung weiter erhitzt werden. In dieser zweiten Stufe des Härtungsprozesses genügt jedoch ein geringer Pressdruck, der die Druckfestigkeit des Schaumstoffes bei der Härtungstemperatur nicht übersteigt. Die Druckfestigkeit der Schaumstoffschicht nimmt daher auch beim Verfahren der Erfindung im Laufe des Härtungsprozesses bis ins Innere der Schaumstoffschicht ab, jedoch werden nachteilige Deformationen der Schaumstoffschicht infolge des geringen Pressdruckes vermieden. Nach der endgültigen Aushärtung lässt man den gebildeten Schichtwerkstoff abkühlen, wobei die Schaumstoffschicht ihre hohe Druckfestigkeit wiedererlangt.

Typische Arbeitsbedingungen, bei denen handelsübliche Prepregs zu fliessen und zu härten beginnen, sind Pressdrucke von mehr als $1 \text{ N/mm}^2$ und Temperaturen oberhalb 140°C. Diese Bedingungen werden beim Verfahren der Erfindung im allgemeinen nicht länger als 5 sec bis 3 min angewendet. In der Regel genügt eine Pressdauer von weniger als 1 min bis zum Abschluss der Fliessvorgänge. Das Prepregmaterial wird üblicherweise in einer nach dem Gewicht bemessenen Menge auf das Kernmaterial aus Hartschaumstoff aufgelegt, füllt aber im allgemeinen nicht die gesamte Querschnittsfläche der Form aus. Beim Einwirken des Pressdruckes fliesst das plastisch erweichte Kunststoffmaterial bis an die Grenzen der Querschnittsfläche. Der Abschluss der Fliessvorgänge ist an der vollständigen Ausfüllung des Formhohlraumes sicher zu erkennen.

In der zweiten Erhitzungsstufe kann die gleiche Temperatur wie in der ersten Stufe angewendet werden, obwohl man auch eine höhere oder niedrigere, für die Aushärtung des Kunststoffes geeignete Temperatur einwirken lassen kann. Die erforderliche Härtungszeit liegt zwischen 15 sec und 10 min. Wenn es auch nicht grundsätzlich nötig ist, in der zweiten Stufe einen Pressdruck anzuwenden, so ist es doch vorteilhaft, den Pressdruck so hoch wie erfindungsgemäss möglich einzustellen. Man geht also vorzugsweise bis dicht an die Druckfestigkeit des Schaumstoffes bei der Härtungstemperatur heran. Der Pressdruck in der zweiten Stufe muss ausreichen, um den gebildeten Schichtwerkstoff in der gewünschten Gestalt festzuhalten und eventuelle Verwerfungen zu verhindern, die in manchen Fällen bei der allmählichen Erwärmung des Schaumstoffes auftreten können.

Die erfindungsgemäss eingesetzten «Prepregs» sind schichtförmige Harze mit eingelagerten Fasern, ggf. in Form von Strängen, Geweben oder Vliesen. Der Harzanteil besteht aus Duroplasten, die bei Raumtemperatur hochviskos, pastenförmig oder fest sind und beim Erhitzen fliessfähig werden. Die härtbare Komponente besteht in der Regel aus einem ungesättigten Polyesterharz, Vinylesterharz oder einem Epoxidharz. Die für diesen Zweck geeigneten Kunststoffe sind dem Fachmann bekannt und werden ausführlich bei P.H. Selden, «Glasfaserverstärkte Kunststoffe» (Springer-Verlag, Berlin, 1967), Seiten 5 bis 82 beschrieben. Der Faseranteil besteht vorzugsweise aus Mineralfasern, insbesondere Glasfasern, für hochbeanspruchte Schichtwerkstoffe gegebenenfalls auch aus Graphitfasern. Gelegentlich werden auch Synthesefasern aus Polyamid oder Polyester sowie Kombinationen verschiedener Faserarten verwendet. Eine eingehende Beschreibung von geeigneten Fasern findet sich in dem obengenannten Buch von P.H. Selden, Seiten 159 bis 289. Der Faseranteil liegt im allgemeinen zwischen 20 und 80 Gew.-% (jeweils auf das Gesamtgewicht des faserverstärkten Kunststoffes bezogen).

Die zur plastischen Verformung der Prepregs erforderlichen Bedingungen hängen von der Art des Kunststoffharzes und von dem Harz/Faser-Verhältnis ab. Hochviskose Harze erfordern höhere Arbeitstemperaturen als niedrigviskose Harze. Mit zunehmendem Anteil an Fasern und gegebenenfalls weiteren Füllstoffen, ebenso mit zunehmender Harzviskosität muss der zum Auslösen des Fliessens notwendige Pressdruck erhöht werden. Die bevorzugten Arbeitsbedingungen für die erste Verfahrensstufe liegen bei 140 bis 160°C und einem Pressdruck von 1 bis 3 N/mm². Die jeweils erforderlichen Arbeitsbedingungen lassen sich in einem einfachen Vorversuch ermitteln.

Die Wahl des Hartschaumstoffes muss mit der Wahl des verwendeten Prepregs sorgfältig abgestimmt werden. Die Druckfestigkeit des Schaumstoffes bei Raumtemperatur muss gleich gross oder höher sein als der in der ersten Stufe des Verfahrens angewendete Pressdruck und soll wenigstens 0,5 N/mm², vorzugsweise über 1 N/mm² betragen. Dagegen spielt die Druckfestigkeit des Schaumstoffes bei der Härtungstemperatur eine untergeordnete Rolle, da in der zweiten Verfahrensstufe, in der mit einer allmählichen Erwärmung des Schaumstoffes auf die Arbeitstemperatur gerechnet werden muss, der Pressdruck gering gehalten werden kann.

Die Druckfestigkeit des Schaumstoffes hängt überwiegend vom chemischen Aufbau des Schaumstoffes und seinem Raumgewicht ab. Auch die Schaumstruktur hat im Falle anisotroper Schaumstoffe Einfluss auf die Druckfestigkeit. Eine weitere Forderung, die für die Erfindung geeignete Schaumstoffe erfüllen müssen, ist eine ausreichende Temperaturbeständigkeit unter den Härtungsbedingungen. Wie bereits erwähnt, darf der Schaumstoff unter den Härtungsbedingungen in einen thermoelastischen Zustand, jedoch nicht in den schmelzflüssigen Zustand übergehen.

Als Schaumstoffe, die diese Forderungen erfüllen, sind z.B. Polyurethan- und Epoxidharzschaumstoffe zu nennen. Mit besonderem Vorteil werden Polymethacrylimidschaumstoffe eingesetzt. Sie sind nach verschiedenen Verfahren herstellbar, die z.B. in den GB-A 1 078 425 und 1 045 229 und in der DT-C 1 817 156 beschrieben werden. Sie enthalten als charakteristische Monomereinheit zyklische Strukturen mit einer Imidgruppe. Ihre Wärmeformbeständigkeit nach DIN 53424 liegt zwar bei 180 bis 220°. Die zugrundeliegende Messmethode berücksichtigt jedoch nicht ein schon bei wesentlich niedrigeren Temperaturen beginnendes elastisches Verhalten. Dieses führt bei der Anwendung der herkömmlichen Prepreg-Technik unter Aufrechterhaltung eines hohen Pressdruckes bis zum Abschluss der Härtung zu einer allmählichen Verdichtung des Schaumstoffkerns während der Härtung und zu einer elastischen Expansion des Schichtwerkstoffes nach der Entformung.

Der für die Erfindung am besten geeignete Dichtebereich der Schaumstoffe liegt zwischen 50 und 100 kg/m³. Für hoch beanspruchte Schichtwerkstoffe können auch Schaumstoffe höherer Dichte, beispielsweise bis 250 kg/m³ eingesetzt werden.

Die erfindungsgemäss hergestellten Schichtwerkstoffe brauchen nicht in allen Fällen ebene Tafeln zu sein. Je nach der vorgesehenen Anwendung kann der Schaumstoffkern oder die faserverstärkte Kunststoffschicht eine weitgehend beliebige Gestaltung mit angeformten Rändern u. dergl. aufweisen. Vorzugsweise ist die Schaumstoffschicht beidseitig und besonders bevorzugt allseitig von einer faserverstärkten Kunststoffschicht umschlossen. In typischen Fällen ist die Schaumstoffschicht 5 bis 50 mm und die faserverstärkte Kunststoffschicht 1 bis 10 mm dick.

Die erfindungsgemäss hergestellten Schichtwerkstoffe eignen sich als leichte, starre Bauelemente in der Technik, im Fahrzeug- oder Flugzeugbau und im Bauwesen. Als mögliche Anwendungsgebiete der Schichtwerkstoffe seien Gehäuse für technische Geräte, Schaltschränke, Fahrzeugaufbauten, Transportbehälter und Möbelteile genannt, ohne dass damit die Anwendungsgebiete erschöpfend aufgezählt wären.

## Patentanspruch

Verfahren zur Herstellung von Schichtwerkstoffen aus mindestens einer Schicht aus einem hoch temperaturbeständigen Hartschaumstoff und mindestens einer Schicht aus faserverstärktem Kunststoff, wobei der Kunststoff in Form eines beim Erhitzen fliessfähigen und härtenden, faserhaltigen Materials eingesetzt und im Verbund mit dem Hartschaumstoff unter Pressdruck erhitzt und gehärtet wird, dadurch gekennzeichnet, dass die Härtung in zwei Stufen durchgeführt wird, wobei

a) in der ersten Stufe zur Auslösung des Fliessens des Kunststoffes ausreichende Temperatur- und Druckbedingungen bis zum Abschluss der Fliessvorgänge angewendet werden, wobei der Pressdruck über die Druckfestigkeit des Hartschaumstoffes bei der angewandten Temperatur, aber nicht über die Druckfestigkeit bei Raumtemperatur gesteigert wird, und

b) in der zweiten Stufe bei einer zur Aushärtung des Kunststoffes ausreichenden Temperatur und Pressdauer ein Pressdruck nicht über der Druckfestigkeit des Hartschaumstoffes bei der angewandten Temperatur einwirken gelassen wird.

## Revendication

Procédé pour la fabrication de matériaux stratifiés, formés d'au moins une couche d'une mousse rigide, résistante à haute température, et d'au moins une couche de matière synthétique renforcée de fibres, la matière synthétique étant mise en œuvre sous la forme d'une matière chargée de fibres qui devient fluide et durcit au chauffage, cette matière étant chauffée et durcie, en combinaison avec la mousse, sous pression, caractérisé en ce que le durcissement est effectué en deux temps, à savoir:

a) un premier temps dans lequel des conditions de température et de pression suffisantes pour le déclenchement de l'écoulement plastique de la matière synthétique sont appliquées jusqu'à l'achèvement du processus d'écoulement plastique, la pression de moulage étant élevée au-dessus de la résistance à la compression de la mousse à la température appliquée, mais non au-dessus de sa résistance à la compression à la température ambiante, et

b) un second temps dans lequel, dans des conditions de température et de durée de pressage suffisantes pour le durcissement complet de la matière synthétique, on fait agir une pression de moulage qui ne dépasse pas la résistance à la compression à la température appliquée.

## Claim

Process for the preparation of laminated materials from at least one layer of a high temperature-resistant rigid foam and at least one layer of fibre-reinforced plastics material, wherein the plastics material is used in the form of a fibre-containing material which becomes fluid and hardenable on heating, and this plastics material is heated and hardened in conjunction with the foam under moulding pressure, characterised in that the hardening is effected in two stages, wherein

a) in the first stage, temperature and pressure conditions sufficient to initiate flow of the plastics material are applied until the flow process has ended, the moulding pressure being increased above the compressive strenght of the foam at the temperature used, but not above the compressive strength at ambient temperature, and

b) in the second stage, at a temperature and with a moulding cycle sufficient for the curing of the plastics material, a moulding pressure is applied which does not exceed the compressive strength at the temperature used.